# FASCICULE DE BREVET EUROPEEN

(11) **EP 3 533 071 B1**
(45) Date de publication et mention de la délivrance du brevet: **22.07.2020**
(21) Numéro de dépôt: 17792031.1
(22) Date de dépôt: 27.10.2017
(51) Int. Cl.: H01B 3/30, C08K 3/36, H02B 13/035, H01H 33/02, H01B 3/44, H01B 3/46, C08J 7/04

(54) **PROCEDE DE TRAITEMENT DE POLYAMIDE CHARGE EN SILICE PAR IMPREGNATION DANS LE CO2 SUPERCRITIQUE**
VERFAHREN ZUR BEHANDLUNG EINES SILICA-GEFÜLLTEN POLYAMIDS DURCH IMPRÄGNIERUNG IN ÜBERKRITISCHEM CO2
METHOD FOR TREATING A SILICA-FILLED POLYAMIDE BY IMPREGNATING IN SUPERCRITICAL CO2

(30) Priorité: 27.10.2016 FR 1660457
(43) Date de publication de la demande: 04.09.2019
(73) Titulaire: Commissariat à l'Énergie Atomique et aux Énergies Alternatives, 75015 Paris (FR)
(72) Inventeur: PONCELET, Olivier, 38000 Grenoble (FR); GETTO, Daniel, 38120 Le Fontanil (FR)
(74) Mandataire: Nony
(86) Numéro de dépôt international: PCT/EP2017/077636
(87) Numéro de publication internationale: WO 2018/078114

(56) Documents cités:
- WO-A1-03/045448
- WO-A1-2008/055872
- WO-A1-2016/128571
- ANDREW I. COOPER: "Polymer synthesis and processing using supercritical carbon dioxide", JOURNAL OF MATERIALS CHEMISTRY, vol. 10, no. 2, 1 janvier 2000 (2000-01-01), pages 207-234, XP055112373, ISSN: 0959-9428, DOI: 10.1039/a906486i cité dans la demande

## Description

La présente invention se rapporte à un nouveau mode de traitement d'un article en polyamide chargé en silice.

Dans les appareils électriques, en particulier des appareils de moyenne ou haute tension, le ou les composants électriquement isolants peuvent être notamment réalisés en polyamides (par exemple polyamide 6,6 ou polyphthalamide), comprenant des renforts, typiquement des fibres de verre et/ou charges de silice. C'est le cas notamment de la partie diélectrique des disjoncteurs moyenne tension, formée en polyamide 6,6 chargé de 30 à 50 % en poids de fils micrométriques de silice, commercialisés par la Société Schneider Electric. Ces disjoncteurs présentent une durée de vie de plus de 20 ans. Durant toute la vie du disjoncteur, des milliers de tests de claquage sont effectués, généralement deux par jour, tests qui sollicitent mécaniquement très fortement le polymère chargé. La combinaison du polyamide 6,6 avec des fibres micrométriques de silice a permis d'atteindre les performances mécaniques souhaitées sur toute la durée de vie du disjoncteur et à un coût compétitif.

Dans les appareils électriques de moyenne ou haute tension, tels que des disjoncteurs, les fonctions d'isolation électrique et d'extinction des arcs électriques sont typiquement assurées par un gaz isolant qui est confiné à l'intérieur de l'appareil.

Actuellement, le gaz le plus souvent utilisé dans ce type d'appareil est l'hexafluorure de soufre (SF₆). Ce gaz inerte présente, en effet, une rigidité diélectrique relativement haute, une bonne conductivité thermique et des pertes diélectriques peu élevées. Après avoir été dissocié par un arc électrique, il se recombine rapidement et presque totalement. De plus, il est ininflammable et son prix est modéré.

Toutefois, l'hexafluorure de soufre présente une certaine nocivité du point de vue de l'environnement. Il présente ainsi un potentiel de réchauffement global (PRG) de 22 800 (relativement au CO₂ sur 100 ans) et une durée de séjour dans l'atmosphère de 3200 ans, ce qui le place parmi les gaz à fort pouvoir d'effet de serre.

Par conséquent, l'usage du SF₆ va être réglementé, voire interdit, ce qui a conduit les industriels à chercher des alternatives au SF₆.

En remplacement du SF₆, il a ainsi été proposé d'utiliser différents milieux gazeux alternatifs qui, tout en ayant de bonnes propriétés d'isolation électrique et d'extinction des arcs électriques, aient un impact sur l'environnement faible.

On peut citer par exemple les milieux gazeux décrits dans les documents FR 2 988 215, FR 2 975 820 et FR 2 975 836, et notamment un mélange de gaz de dilution tel que l'air sec et d'une fluorocétone.

Toutefois, ce changement de la nature du gaz isolant des appareils électriques n'est pas sans poser des problèmes, notamment en termes de tenue diélectrique en surface du ou des composants électriquement isolants.

De fait, il est connu que les polyamides tels que le polyamide 6,6, ont naturellement une grande affinité pour l'eau. Un polyamide non chargé peut reprendre jusqu'à 7 % en masse d'eau. Toutefois, la présence d'eau en excès modifie fortement les propriétés mécaniques. Paradoxalement, les propriétés mécaniques exceptionnelles du polyamide sont dues à la présence de molécules d'eau de structure qui jouent le rôle de plastifiant [1]. Un compromis a ainsi été trouvé en chargeant le polyamide avec de la silice, typiquement des fibres micrométriques de silice. La reprise en eau maximale est alors de l'ordre de 2 à 3 % en masse.

Toutefois, la présence, à la surface des pièces moulées ou injectées en polyamide, de fibres de silice, faisant saillie au niveau de la surface du composant électriquement isolant, provoque des « effets de pointes » qui amorcent le claquage entre les électrodes.

Or, ce phénomène est exacerbé en fonction de la nature de l'atmosphère dans laquelle baigne le disjoncteur. Par exemple, la rigidité électrique de l'air sec par rapport au SF₆ est 2,3 fois plus élevée, mais celle-ci est fortement dégradée en fonction du taux d'humidité.

Par conséquent, les composants actuels à base de polyamide chargé en silice ne peuvent être utilisés dans un milieu gazeux de type air sec et/ou fluorocétone, du fait de l'évolution de leurs propriétés diélectriques.

Pour remédier aux inconvénients liés à la substitution de l'hexafluorure de soufre par d'autres milieux gazeux dans les appareils électriques, il apparaît nécessaire de limiter la reprise en eau des pièces en polyamide chargé en silice.

Une première voie pour pallier ces inconvénients serait de remplacer le polyamide 6,6, généralement mis en œuvre, par un polyamide aromatique naturellement plus hydrophobe, mais également plus coûteux. Cela implique également d'effectuer des longs tests de qualification et d'homologation, sans garantie que les propriétés mécaniques seront équivalentes à celles du polyamide 6,6. Egalement, on peut s'attendre à ce que ces polyamides aromatiques soient très sensibles aux UV émis lors des tests de claquage et se dégradent prématurément.

Une autre alternative serait de modifier par un traitement approprié les pièces injectées ou moulées de polyamide chargé en silice, de façon à limiter la reprise en eau de la matrice polymère.

La présente invention vise précisément à proposer un traitement approprié pour limiter la reprise en eau des matériaux à base de polyamide chargé en silice.

Plus particulièrement, la présente invention propose de mettre en œuvre le dioxyde de carbone supercritique (également noté « CO₂ supercritique » ou « sCO₂ ») comme vecteur pour l'imprégnation du matériau à base de polyamide chargé en silice par un additif hydrophobe, telle qu'une huile siliconée.

Ainsi, l'invention concerne, selon un premier de ses aspects, un procédé de traitement d'un matériau à base de polyamide(s) comprenant au moins des fibres et/ou charges de silice, par imprégnation par au moins un additif hydrophobe dans le CO₂ supercritique.

Le procédé de traitement selon l'invention est plus particulièrement destiné à réduire la reprise en eau dudit matériau.

L'additif hydrophobe est de manière avantageuse une huile siliconée soluble dans le CO₂ supercritique. Il peut encore s'agir d'un composé fluoré, par exemple de type uréique. Les additifs hydrophobes pouvant être mis en œuvre pour l'imprégnation du matériau selon l'invention sont plus particulièrement détaillés dans la suite du texte.

Par « CO₂ supercritique », on entend au sens de l'invention le CO₂ utilisé à une température et une pression supérieure à leur valeur critique.

Le CO₂ supercritique est généralement utilisé industriellement dans des procédés d'extraction ou de purification. Plus précisément, il correspond à un fluide obtenu en soumettant le dioxyde de carbone à une température d'au moins 31 °C et une pression d'au moins 74 bar. Il est particulièrement avantageux eu égard à son coût, sa facilité de mise en œuvre, son ininflammabilité, sa non toxicité et à ses propriétés de solvant.

En outre, et contrairement aux solvants organiques, le CO₂ supercritique ne nécessite pas d'étape de recyclage ou de traitement à l'issue de son utilisation. De fait, le dioxyde de carbone peut être libéré sous forme de gaz à l'issue du traitement. Enfin, le procédé d'imprégnation selon l'invention ne requiert pas d'étape additionnelle de séchage après le traitement d'imprégnation.

Le CO₂ supercritique est déjà mis en œuvre comme milieu solvant pour la synthèse de polymères [2]. Par ailleurs, le CO₂ supercritique a été proposé, en alternative à des solvants aqueux, pour la teinture de textiles [3] ou de papiers.

Toutefois, à la connaissance des inventeurs, l'utilisation de CO₂ supercritique n'a encore jamais été proposée pour réduire la reprise en eau du matériau d'un composant électriquement isolant d'un appareil électrique selon l'invention, à base de polyamide(s) chargé en fibres et/ou charges de silice.

Le procédé de traitement selon l'invention s'avère particulièrement avantageux à plusieurs titres.

Tout d'abord, comme illustré dans les exemples qui suivent, il permet de réduire significativement la reprise en eau dudit matériau en polyamide(s) chargé en silice.

Sans vouloir être lié par la théorie, le CO₂ supercritique étant un gaz dense, les molécules de CO₂ n'ont aucune affinité pour les molécules d'eau emprisonnées dans les porosités du polymère. En revanche, elles peuvent mécaniquement les « chasser » du polymère et vider les pores « hydrophiles » en les remplissant par l'additif hydrophobe mis en œuvre, par exemple l'huile de silicone. Le polyamide se gonfle facilement dans le CO₂ supercritique, celui-ci pouvant alors diffuser dans la matrice polymérique en véhiculant l'additif souhaité.

Le traitement d'imprégnation selon l'invention par l'additif hydrophobe à l'aide du CO₂ supercritique permet ainsi avantageusement un traitement hydrophobe en profondeur du matériau, et ainsi d'augmenter significativement l'hydrophobie du matériau.

Par « imprégnation », on entend que le traitement permet la présence de l'additif hydrophobe au sein du matériau. L'additif hydrophobe est plus particulièrement « piégé » dans la matrice ou réseau polymérique.

Plus particulièrement, le procédé de traitement selon l'invention permet d'imprégner le matériau par le ou lesdits additifs hydrophobes sur une épaisseur s'étendant de la surface du matériau jusqu'à une profondeur d'au moins 200 µm, en particulier jusqu'à au moins 300 µm de profondeur et plus particulièrement jusqu'à au moins 400 µm de profondeur. L'imprégnation du matériau sur une telle épaisseur est suffisante pour apporter un effet durable de protection à l'eau et de résistance à la manipulation (résistance aux rayures).

Le matériau imprégné par l'additif hydrophobe, obtenu à l'issue du procédé de l'invention, présente ainsi une reprise en eau réduite comparativement au matériau non traité. Autrement dit, il présente une hydrophobicité améliorée.

La « reprise en eau » traduit la quantité plus ou moins importante d'eau qui peut être absorbée par le matériau. Elle peut être exprimée par le rapport de l'augmentation de poids du matériau après immersion dans l'eau par rapport à son poids initial. Comme détaillé dans les exemples qui suivent, la reprise en eau peut plus particulièrement consister à placer les échantillons de matériau préalablement séchés, dans des conditions d'humidité relatives données et pendant une durée prédéfinie (par exemple immersion dans l'eau à 90 °C pendant trois semaines) ; le matériau s'hydrate, ce qui fait passer la masse de l'échantillon d'une valeur initiale m (à l'état séché) à une valeur finale (m+δm). On désignera spécifiquement par « reprise en eau » du matériau le rapport δm/m exprimé en pourcentage.

En particulier, comme illustré dans les exemples qui suivent, la reprise en eau du matériau est avantageusement inférieure ou égale à 1 %, en particulier inférieure ou égale à 0,7 % et plus particulièrement inférieure ou égale à 0,5 %.

A ce titre, l'imprégnation à l'aide du CO₂ supercritique s'avère plus efficace que l'imprégnation par pression hydrostatique.

Egalement, comparativement à un traitement d'imprégnation par pression hydrostatique, le procédé de l'invention utilisant le CO₂ supercritique est plus simple pour le traitement de pièces de géométrie complexe, et nécessite une quantité réduite d'additif hydrophobe.

D'autre part, le traitement d'imprégnation est avantageusement stable dans le temps. Autrement dit, le matériau imprégné conserve avec le temps ses propriétés améliorées en termes d'hydrophobie, autrement dit de reprise en eau réduite.

En conséquence, les composants électriquement isolants réalisés en un matériau imprégné selon l'invention présentent de bonnes propriétés, notamment en termes de tenue diélectrique en surface, quand bien même ils sont mis en œuvre avec un milieu gazeux autre que le SF₆, comme par exemple un mélange d'air sec et d'une fluorocétone.

Enfin, le traitement d'imprégnation selon l'invention des composants à base de polyamide chargé en silice n'affecte pas leurs propriétés mécaniques.

L'invention concerne ainsi, selon un autre de ses aspects, un matériau à base de polyamide(s) comprenant des fibres et/ou charges de silice, et imprégné par au moins un additif hydrophobe, obtenu à l'issue du procédé d'imprégnation de l'invention.

Elle concerne encore, selon un autre de ses aspects, un composant électriquement isolant, en particulier mis en œuvre dans un appareil électrique, formé en tout ou partie d'un matériau imprégné selon le procédé de l'invention.

D'autres caractéristiques, variantes et avantages du procédé selon l'invention ressortiront mieux à la lecture de la description et des exemples qui suivent, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### MATERIEAU A BASE DE POLYAMIDE CHARGE EN SILICE

Comme mentionné ci-dessus, le matériau considéré selon l'invention est un matériau à base de polyamide(s) comprenant des fibres et/ou charges de silice.

Un matériau imprégné selon l'invention peut plus particulièrement constituer tout ou partie d'un composant électriquement isolant, en particulier mis en œuvre dans un appareil électrique tel qu'un disjoncteur.

Le procédé de l'invention peut être par exemple mis en œuvre directement sur les pièces moulées ou injectées directement utilisables comme composants électriques isolants dans des appareils électriques, par exemple des appareils électriques moyenne ou haute tension, tels que décrits dans la suite du texte. A ce titre, le matériau à base de polyamide peut être de formes diverses.

Il peut être plan ou non. Il peut par exemple se présenter sous la forme d'un film ou d'une couche d'épaisseur comprise entre 2 mm et 1 cm, en particulier entre 3 mm et 5 mm

Par « matériau à base de polyamide(s) », on entend signifier que le matériau comporte en masse au moins 50 %, de préférence au moins 60 %, de polyamide(s).

Le terme « polyamide(s) » désigne un ou plusieurs polymère(s) contenant des fonctions amides résultant d'une réaction de polycondensation entre des acides carboxyliques et des amines.

Ces polyamides peuvent être des homopolymères ou des copolymères, aliphatiques (PA), semi-aromatiques (polyphthalamide, PPA) ou aromatiques (PAA).

A titre d'exemples de polyamides selon l'invention, on peut citer le polyamide 6, polyamide 6,6; polyamide 11, polyamide 12, polyamide 4,5; 6,10 et 6,12; les polyamides semi-aromatiques comme les polyphthalamides, et leurs mélanges.

Selon un mode de réalisation particulier, le matériau est à base de polyamide 6,6.

Selon un autre mode de réalisation particulier, le matériau est à base de polyphthalamide (ou PPA), polyamide dit « haute performance » en raison de ses excellentes propriétés mécanique et de résistance aux hautes températures.

Le matériau à base de polyamide selon l'invention comprend au moins des fibres de silice (encore appelées « fibres de verre »), des charges de silice ou un mélange de fibres et de charges de silice.

Les fibres et/ou charges de silice sont de taille micrométrique. Typiquement, les fibres de silice peuvent présenter un diamètre compris entre 20 et 70 µm et une longueur de plusieurs centaines de micromètres.

Ces fibres et/ou charges de silice présentes dans le matériau à base de polyamide d'un composant électriquement isolant sont connues sous l'appellation « renforts ». De préférence, il s'agit de fibres micrométriques de silice.

Selon un mode de réalisation particulier, le matériau à traiter selon l'invention est à base de polyamide, en particulier de polyamide 6,6 ou de polyphthalamide, chargé en fibres micrométriques de silice.

Le matériau à traiter peut comprendre des fibres et/ou charges de silice, en particulier des fibres de silice, dans une proportion massique supérieure ou égale à 20 %, en particulier supérieure ou égale à 30 %, et plus particulièrement comprise entre 30 et 50 %, de la masse totale dudit matériau.

De manière avantageuse, le matériau comprend une proportion massique en fibres de silice d'environ 50 % de la masse totale du matériau. Une proportion élevée en silice permet de réduire le coût du matériau, la silice étant généralement moins chère que les polyamides.

Le matériau à base de polyamide peut éventuellement comprendre en outre des renforts autres que les charges et/ou fibres de silice.

La nature des renforts est choisie de manière adéquate de manière à ne pas affecter les propriétés diélectriques du matériau.

Il peut s'agir par exemple de fibres organiques, telles que des fibres polymériques, par exemple des fibres de polyester ou d'aramide.

Les charges peuvent être organiques ou minérales. A titre d'exemples, on peut citer les nitrures de bore hexagonaux ou encore les alumines alpha.

Les renforts peuvent être constitués d'un mélange de fibres et de charges.

Selon un mode de réalisation particulier, le matériau en polyamide chargé en fibres de silice est, préalablement au traitement d'imprégnation, soumis à un traitement thermique propice à l'élimination de l'eau adsorbée en surface et aux pieds des fibres micrométriques de silice qui font saillie au niveau de la surface du matériau en polyamide.

Ce traitement thermique peut être par exemple opéré en soumettant le matériau à une température comprise entre 50°C et 100 °C, en particulier d'environ 90 °C.

La durée du traitement thermique peut être comprise entre 5 heures et 48 heures, en particulier être d'environ 36 heures.

### ADDITIF HYDROPHOBE

Comme évoqué précédemment, le procédé de l'invention opère l'imprégnation du matériau par un ou plusieurs additifs hydrophobes.

Il est entendu que la nature de l'additif hydrophobe est choisie au regard de son aptitude à pouvoir imprégner le matériau à base de polyamide(s) dans les conditions d'imprégnation dans le CO₂ supercritique selon l'invention.

Par « hydrophobe », on entend signifier que l'additif mis en œuvre présente une solubilité dans l'eau, à 25 °C, inférieure à 0,001 % en poids.

En particulier, l'additif hydrophobe mis en œuvre pour imprégner le matériau en polyamide présente une bonne solubilité dans le CO₂ supercritique.

Par « soluble » dans le CO₂ supercritique, on entend signifier qu'il est possible de dissoudre ledit additif à raison d'au moins 1 g d'additif pour 8 g de CO₂ supercritique.

De préférence, l'additif hydrophobe est tel que le ratio de la masse de l'additif dissout sur la masse de CO₂ supercritique est compris entre 1/10 et 1/8.

De préférence, l'additif hydrophobe est soluble dans le CO₂ supercritique pour des conditions de température inférieure à 130 °C, en particulier comprise entre 50 et 100 °C et de pression comprise entre 250 et 450 bar.

De fait, des températures trop élevées lors du traitement des pièces traitées selon l'invention seraient susceptibles de provoquer une déformation des pièces lors du gonflement du matériau en polyamide par le fluide supercritique. Egalement, des pressions trop élevées rendraient difficile l'utilisation de l'autoclave pour la mise en œuvre du traitement d'imprégnation.

Selon un mode réalisation particulièrement préféré, l'additif hydrophobe peut présenter des propriétés diélectriques. En particulier, dans le cas de l'élaboration d'un matériau pour lequel une très bonne tenue diélectrique est requise, l'additif hydrophobe mis en œuvre est choisi parmi les composés présentant de bonnes propriétés diélectriques.

De manière avantageuse, l'additif hydrophobe présente une constante diélectrique inférieure ou égale à 3. C'est le cas notamment des huiles siliconées et des composés fluorés décrits dans la suite du texte.

La constante diélectrique peut être mesurée par des techniques connues de l'homme du métier, par exemple *via* la mise en œuvre d'une sonde capacitive de type VEGACAL calibrée avec des liquides dont la constante diélectrique est connue.

Par ailleurs, de manière avantageuse, l'additif hydrophobe mis en œuvre présente une bonne affinité avec le matériau à base de polyamide.

Par exemple, l'additif hydrophobe peut établir avec la matrice polyamide des interactions de type liaisons hydrogène ou interactions de Van der Waals.

Une telle affinité de l'additif hydrophobe avec la matrice polymérique permet ainsi d'assurer que l'additif hydrophobe demeure au sein de la matrice polyamide du matériau imprégné selon l'invention, en particulier ne désorbe pas de la matrice, par exemple lors de la dépressurisation de l'autoclave mis en œuvre pour le traitement d'imprégnation, et/ou au cours du temps.

Enfin, de manière avantageuse, l'additif hydrophobe présente une bonne stabilité dans le temps afin de permettre un traitement hydrophobe durable du matériau.

De préférence, l'additif hydrophobe se présente, aux température et pression mises en œuvre pour l'imprégnation, sous la forme d'un fluide, plus ou moins visqueux.

En particulier, l'additif hydrophobe présente de préférence une viscosité à 25° C comprise entre 20 mPa.s et 600 mPa.s, en particulier entre 50 mPa.s et 400 mPa.s. La viscosité peut être par exemple mesurée à l'aide d'un viscosimètre BROOKFIELD.

L'additif hydrophobe mis en œuvre dans le procédé d'imprégnation selon l'invention peut être plus particulièrement choisi parmi les huiles siliconées et des composés fluorés tels que décrits ci-dessous.

### Huiles siliconées

L'additif hydrophobe peut être choisi, selon une première variante de réalisation, parmi les huiles siliconées, notamment les huiles siliconées diélectriques et solubles dans le CO₂ supercritique.

Les huiles siliconées diélectriques sont connues pour leur mise en œuvre comme fluides diélectriques dans des appareillages électriques.

De préférence, l'huile siliconé présente une viscosité, à 25 °C, comprise entre 20 et 600 mPa.s, en particulier comprise entre 20 et 400 mPa.s et de préférence comprise entre 50 et 300 mPa.s. La viscosité peut être par exemple mesurée à l'aide d'un viscosimètre BROOKFIELD.

A titre d'huiles siliconées hydrophobes, peuvent être mises en œuvre les huiles siliconées linéaires de type polydiméthylsiloxane.

On peut par exemple citer les huiles siliconées linéaires commercialisées par la société Clearco, sous les dénominations « PSF Fluids » (pour « Polydimethylsiloxane fluids » en langue anglaise). Ces huiles siliconées présentent de bonnes propriétés diélectriques. Elles peuvent présenter des viscosités à 25 °C comprises entre 0,65 cSt et 20 cSt (commercialisées sous la dénomination « PSF-Low Viscosities »), comprises entre 50 cSt et 1000 cSt (commercialisées sous la dénomination « PSF-Standard Viscosities ») ou entre 5000 cSt et 100000 cSt (commercialisées sous la dénomination « PSF-High Viscosities »).

Les huiles siliconées peuvent encore être choisies parmi les huiles siliconées aromatiques.

L'huile siliconée peut être plus particulièrement choisie parmi les polyaryl/alkylsiloxanes, en particulier parmi les polyphényl/alkylsiloxanes tels que polyphényl/méthylsiloxane et polyphényl/propylsiloxane.

Ces huiles présentent avantageusement une très bonne stabilité chimique, autrement dit une bonne résistance au vieillissement.

De préférence, l'huile siliconée mise en œuvre est peu polaire. En particulier, elle ne comprend pas de groupements hydroxyles terminaux. En effet, les huiles siliconées portant des fonctions OH terminales forment des émulsions dans le CO₂ supercritique. Ces émulsions restent en surface du matériau en polyamide en formant un gel qui mousse fortement lors de la remise à pression ambiante et température ambiante.

Selon un mode de réalisation particulièrement préféré, l'huile siliconée mise en œuvre en tant qu'additif hydrophobe est une huile de type polyphényl/alkylsiloxane présentant la structure (I) suivante : 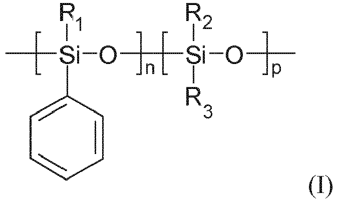 dans laquelle :
R₁ représente un radical phényle ou un radical alkyle en C₁-C₆, en particulier un radical méthyle ou propyle, notamment un radical méthyle ;
R₂ et R₃ représentent, indépendamment les uns des autres, un radical alkyle en C₁-C₆, en particulier un radical méthyle ou propyle, notamment un radical méthyle ; et
n et p sont tels que l'huile siliconée présente une viscosité à 25 °C telle que spécifiée précédemment.

En particulier, l'huile siliconée aromatique peut être choisie parmi les huiles poly(diméthylsiloxane-co-méthylphénylsiloxane) (N° CAS : 63148-52-7) et poly(diméthylsiloxane-co-diphénylsiloxane) (N° CAS : 68083-14-7).

A titre d'exemples, on peut citer les huiles siliconées de type polyphényl/méthylsiloxane commercialisées sous les dénominations « Silicone oil AR 200 » et « Silicone oil AR 20 » par la Société Dow Corning, ou sous les grades « DPDM-400 » et « PM-125 Phenylmethyl » par la Société Clearco.

### Composés fluorés

Selon une autre variante de réalisation, l'additif hydrophobe peut être choisi parmi des composés fluorés hydrophobes solubles dans le CO₂ supercritique.

Il est connu que le CO₂ supercritique est un excellent solvant des composés fluorés.

Les composés fluorés sont plus particulièrement choisis parmi les composés présentant au moins une chaîne hydrocarbonée hydrophobe au moins partiellement fluorée, en particulier totalement fluorée, présentant au moins 6 atomes de carbone, de préférence au moins 8 atomes de carbone.

De préférence, les composés fluorés présentent au moins une chaîne hydrocarbonée hydrophobe au moins partiellement fluorée et au moins un groupement apte à assurer une accroche du composé fluoré avec le réseau polyamide, en particulier un groupement apte à interagir par liaison hydrogène ou par interaction de Van der Waals avec les chaînes de polyamide.

Un tel groupement permet d'assurer que l'additif hydrophobe demeure dans la matrice polyamide, même après dépressurisation de l'autoclave et/ou au cours du temps.

Un tel groupement peut être par exemple un groupement -NH-C(O)-O-(composés carbamates), -NH-C(O)- (composés amides) ou -NH-C(O)-NH- (composés uréiques).

De préférence, la chaîne hydrocarbonée hydrophobe est une chaîne aliphatique linéaire ou ramifiée, saturée ou insaturée, de préférence saturée, comprenant au moins 6 atomes de carbone, ladite chaîne étant au moins partiellement fluorée.

En particulier, la chaîne hydrocarbonée hydrophobe peut présenter au moins 8 atomes de carbone, en particulier entre 8 et 16 atomes de carbone, de préférence entre 10 et 12 atomes de carbone.

De préférence, au moins 2 atomes de carbone sur 5 de la chaîne hydrocarbonée, en particulier au moins 1 atome de carbone sur 2 de la chaîne hydrocarbonée est porteur d'un ou de deux atomes de fluors.

Selon un mode de réalisation particulier, la chaîne hydrocarbonée est totalement fluorée (chaîne dite perfluorée). Les composés présentant une chaîne perfluorée sont avantageusement de coût moins élevé que les composés à chaîne partiellement fluorée.

La chaîne hydrocarbonée hydrophobe du composé fluoré peut également être éventuellement porteuse d'un ou plusieurs atomes de chlore.

Selon un mode de réalisation particulier, le composé fluoré mis en œuvre à titre d'additif hydrophobe selon le procédé de l'invention est de formule (II) suivante : 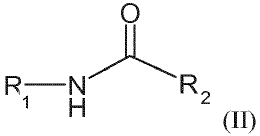 dans laquelle :
- R₂ représente :
   (a) un groupe -OR₃ (composés de type carbamate)
   (b) un groupe -R₃ (composés de type amide) ; ou
   (c) un groupe -NHR₃ (composés de type uréique) ;
- au moins l'un des R₁ et R₃ représente une chaîne hydrocarbonée hydrophobe, au moins partiellement fluorée, en particulier telle que définie précédemment ;
   de préférence, l'un des R₁ et R₃ représente une chaîne hydrocarbonée comportant au moins 6 atomes de carbone, en particulier au moins 10 atomes de carbone, et dans laquelle au moins 2 atomes de carbone sur 5 de la chaîne hydrocarbonée, en particulier au moins 1 atomes de carbone sur 2 de la chaîne hydrocarbonée est porteur d'un ou de deux atomes de fluors ;
- l'autre des R₁ et R₃ représente un groupe C₁₋₂₀-alkyle ou C₁₋₂₀-alcényle, éventuellement substitué, de préférence un groupe C₆₋₂₀-alkyle, ledit groupe étant éventuellement porteur d'un ou plusieurs atomes de chlore.

De préférence, le composé fluoré mis en œuvre à titre d'additif hydrophobe selon le procédé de l'invention est de formule (II) précitée, dans laquelle R₂ représente un groupe -OR₃, un groupe -R₃ ou un groupe -NHR₃ avec R₃ représentant chaîne hydrocarbonée hydrophobe, au moins partiellement fluorée telle que définie précédemment.

Les composés fluorés pouvant être mis en œuvre à titre d'additifs hydrophobes selon le procédé de l'invention peuvent être obtenus par des méthodes de synthèse connues de l'homme du métier.

Par exemple, les composés fluorés de formule (II) précitée peuvent être aisément obtenus par réaction entre un composé de type isocyanate R₁-N=C=O et un composé de type alcool (R₃-OH), acide carboxylique (R₃-COOH) ou amine (R₃-NH₂), suivant les schémas réactionnels suivants :
(a) 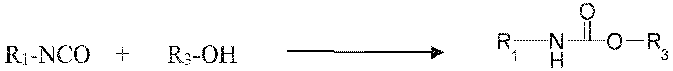
(b) 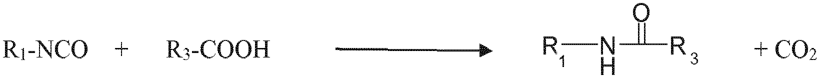 c)

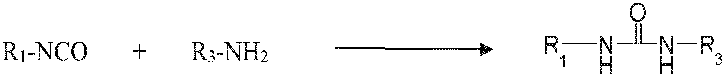

A titre d'exemple, l'exemple 3 qui suit illustre l'imprégnation d'un matériau selon l'invention dans le CO₂ supercritique par un composé fluoré de type uréique (le N-décyl-N'-perfluorodécylurée).

Bien entendu, l'invention n'est pas limitée aux additifs hydrophobes spécifiquement décrits ci-dessus. D'autres additifs hydrophobes peuvent être envisagés pour autant qu'ils soient adaptés à l'imprégnation dans le CO₂ supercritique du matériau en polyamide chargé en silice.

Selon un mode de réalisation particulier, le ou les additifs hydrophobes mis en œuvre selon l'invention sont distincts des colorants.

Il appartient à l'homme du métier d'ajuster la quantité d'additif(s) hydrophobe(s) mis en œuvre, notamment au regard du volume du matériau à base de polyamide(s) à traiter.

Typiquement, la quantité en additif(s) hydrophobe(s) mis en œuvre peut être comprise entre 0,2 et 5 % en poids par rapport à la masse de matériau à base de polyamide à imprégner, en particulier comprise entre 0,5 et 3 % en poids.

### TRAITEMENT D'IMPREGNATION

Le traitement d'imprégnation dans le CO₂ supercritique peut être mis en œuvre à l'aide de tout dispositif connu de l'homme du métier et adapté à la mise en œuvre d'un solvant supercritique.

De manière avantageuse, le procédé d'imprégnation est opéré en l'absence de solvant additionnel. Autrement dit, le seul solvant présent lors de l'imprégnation selon l'invention est le CO₂ à l'état supercritique.

L'utilisation du CO₂ supercritique évite ainsi l'utilisation de solvant organique qui devrait être ensuite éliminé du matériau imprégné obtenu.

L'imprégnation du matériau par l'additif hydrophobe en utilisant le CO₂ supercritique peut être ainsi opérée *via* au moins les étapes consistant en :
(i) disposer d'un matériau à base de polyamide(s) chargé en silice à traiter ;
(ii) maintenir le matériau à traiter dans le CO₂ supercritique en présence de l'additif hydrophobe, dans des conditions propices à l'imprégnation du matériau par l'additif hydrophobe ; et
(iii) récupérer le matériau imprégné par ledit additif hydrophobe.

Typiquement, le procédé d'imprégnation de l'invention est mis en œuvre au sein d'un réacteur fermé, en particulier un autoclave.

Ainsi, selon un mode de réalisation particulier, le procédé de l'invention comprend au moins les étapes suivantes :
- placer un matériau à base de polyamide(s) chargé en silice et au moins un additif hydrophobe dans un autoclave ;
- générer du dioxyde de carbone supercritique dans l'autoclave ;
- maintenir le matériau dans l'autoclave en présence du CO₂ supercritique et de l'additif hydrophobe afin d'assurer l'imprégnation du matériau par ledit additif hydrophobe ;
- récupérer le matériau imprégné par dépressurisation de l'autoclave ; et
- optionnellement sécher le matériau ainsi imprégné.

L'imprégnation du matériau en polyamide par l'additif hydrophobe est assurée par le maintien du dioxyde de carbone sous forme supercritique. Ceci permet une diffusion très rapide de l'additif hydrophobe dans le substrat, typiquement quelques minutes.

La température d'imprégnation peut être notamment comprise entre 50 °C et 150 °C, et en particulier entre 80 et 120 °C et plus particulièrement entre 90 et 100 °C.

La pression lors de l'imprégnation peut être comprise entre 80 et 450 bar, en particulier entre 150 et 400 bar, et plus particulièrement entre 200 et 350 bar.

La durée du traitement d'imprégnation peut être comprise entre 30 et 180 minutes, et notamment entre 60 et 135 minutes.

Selon un mode de réalisation particulier, le traitement d'imprégnation est opéré en maintenant l'autoclave à une température comprise entre 80 et 100 °C, à une pression comprise entre 250 et 300 bar, et ce pendant 60 à 120 minutes.

L'étape qui consiste à dépressuriser l'autoclave consiste plus précisément à dépressuriser jusqu'à la pression atmosphérique et à évacuer le dioxyde de carbone (préférentiellement sous forme de gaz). Elle est avantageusement réalisée à une température qui permet d'assurer la transition de phase CO₂ supercritique vers CO₂ gaz, en évitant la phase liquide du CO₂. Cette étape est donc avantageusement réalisée à une température comprise entre 45 et 85 °C. En particulier, elle peut être réalisée à une température comprise entre 60 et 70 °C.

Selon un mode de réalisation particulier, la température de dépressurisation de l'autoclave est avantageusement la température à laquelle s'effectue le traitement d'imprégnation.

Lors de l'évacuation de l'autoclave, les conditions sont telles que, de manière avantageuse, l'autoclave ne comprend pas de CO₂ liquide.

De manière générale, la durée de dépressurisation de l'autoclave est comprise entre 20 et 120 minutes, en particulier entre 30 et 90 minutes. Cette étape de dépressurisation étant endothermqiue, elle est réalisée lentement pour éviter les chocs thermiques.

Lors de la dépressurisation de l'autoclave (étape d'évacuation), le dioxyde de carbone sous forme de gaz est expulsé de l'intérieur du matériau à base de polyamide, alors que l'additif hydrophobe demeure prisonnier du matériau.

La matrice en polyamide est saturée de CO₂ qui va mettre plusieurs jours avant de s'équilibrer avec le CO₂ atmosphérique.

A l'issue de la détente, la masse maximale résiduelle de CO₂ dans la matrice polyamide est inférieure à 5 %.

La dernière étape permet de récupérer le matériau imprégné, et éventuellement de le séparer de l'additif hydrophobe qui n'a pas imprégné le matériau. L'additif hydrophobe résiduel peut être avantageusement recyclé pour imprégner de nouvelles pièces. Le procédé de traitement selon l'invention permet ainsi de minimiser les résidus.

A l'issue de l'imprégnation selon l'invention, le matériau à base de polyamide chargé en silice comprend plus particulièrement le ou lesdits additifs hydrophobes en une teneur massique comprise entre 0,2 et 5 %, en particulier entre 0,5 et 2 % et plus particulièrement entre 0,8 et 1,2 %, par rapport au poids total du matériau.

Comme indiqué précédemment, le procédé de l'invention permet d'imprégner le matériau par le ou lesdits additifs hydrophobes sur une épaisseur s'étendant de la surface du matériau jusqu'à une profondeur d'au moins 200 µm, en particulier d'au moins 300 µm et plus particulièrement jusqu'à au moins 400 µm de profondeur. Une imprégnation sur une telle épaisseur permet avantageusement d'apporter un effet durable de protection à l'eau.

Comme évoqué précédemment, le matériau imprégné selon l'invention présente avantageusement une reprise eau réduite comparativement au matériau non traité.

La reprise en eau (δm/m, évaluée après immersion dans l'eau à 90°C pendant 3 semaines) est avantageusement inférieure ou égale à 1 %, en particulier inférieure ou égale à 0,8 %, de préférence inférieure ou égale à 0,5 %.

### APPLICATIONS

Comme évoqué précédemment, le matériau à base de polyamide chargé en silice et traité selon le procédé de l'invention peut constituer tout ou partie d'un composant électriquement isolant, en particulier mis en œuvre dans des appareils électriques, en particulier des appareils moyenne ou haute tension.

Les termes « moyenne tension » et « haute tension » sont utilisés dans leur acceptation habituelle, à savoir que le terme « moyenne tension » désigne une tension qui est supérieure à 1000 volts en courant alternatif et à 1500 volts en courant continu mais qui ne dépasse pas 52000 volts en courant alternatif et 75000 volts en courant continu, tandis que le terme « haute tension » désigne une tension qui est strictement supérieure à 52000 volts en courant alternatif et à 75000 volts en courant continu.

L'invention concerne ainsi, selon un autre de ses aspects, un composant électriquement isolant, formé en tout ou partie d'un matériau imprégné selon le procédé de l'invention.

Les composants électriquement isolants peuvent être notamment les pièces de traversée de courant entourant les conducteurs (en anglais, « bushing »), la pièce entourant le fusible également dénommée « puits fusible », l'arbre porte-couteuax également dénommé « arbre porte-contacts » (en anglais, « mobile shaft »), la poutre (en anglais, « insulator ») ou encore l'enceinte étanche comprenant notamment le milieu gazeux assurant l'isolation électrique et l'extinction des arcs électriques susceptibles de se former au sein de ladite enceinte étanche.

La présente invention se rapporte ainsi, selon un autre de ses aspects, à l'utilisation d'un composant électriquement isolant formé en tout ou partie d'un matériau imprégné selon le procédé décrit précédemment, dans un appareil électrique.

Elle concerne encore un appareil électrique, en particulier un appareil électrique moyenne ou haute tension, tel qu'un disjoncteur, comprenant un composant électriquement isolant formé en tout ou partie d'un matériau imprégné selon le procédé de l'invention.

Cet appareil électrique peut notamment être un transformateur électrique à isolation gazeuse comme, par exemple, un transformateur d'alimentation ou un transformateur de mesure. L'appareil électrique peut également être une ligne à isolation gazeuse, aérienne ou souterraine, ou un jeu de barres pour le transport ou la distribution de l'électricité. Enfin, il peut aussi s'agir d'un appareil électrique de connexion/déconnexion (aussi appelé appareil de coupure) comme, par exemple, un disjoncteur, un interrupteur, un sectionneur, un combiné interrupteur-fusibles, un sectionneur de mise à la terre ou un contacteur.

D'une manière générale, ces appareils électriques sont dotés d'une enceinte étanche dans laquelle se trouvent au moins un composant électriquement isolant, des composants électriques ainsi qu'un milieu gazeux assurant l'isolation électrique et l'extinction des arcs électriques susceptibles de se former au sein de cette enceinte étanche.

Comme évoqué précédemment, ce milieu gazeux peut être de natures variées, comme par exemple décrit dans les documents FR 2 975 820, FR 2 988 215 et EP 3 023 996.

En particulier, il peut comporter au moins une fluorocétone, telle que la décafluoro-2-méthylbutan-3-one (C5K). Il peut s'agir par exemple d'un mélange d'un gaz vecteur tel que l'air, en particulier l'air sec, et d'une fluorocétone.

Le traitement par imprégnation du procédé de l'invention est bien entendu mis en œuvre avant l'agencement dudit composant électrique isolant dans l'enceinte étanche de l'appareil électrique.

L'invention va maintenant être décrite au moyen des exemples suivants, donnés bien entendu à titre illustratif et non limitatif de l'invention.

### EXEMPLES

### Matériaux et méthode

### Echantillons de polyamide chargés en fibres de silice

Les essais ont été réalisés sur des échantillons de polyphthalamide chargé en fibres micrométriques de silice (50 % en masse) de type GRIVORY HT2V-5H fournis par la société Schneider Electric.

Toutes les mesures ont été faites sur au moins 6 échantillons (plaques : 3 mm x 35 mm x 65 mm).

Pour caractériser les échantillons de polyamide mis en œuvre, les expériences suivantes ont été réalisées.

Des échantillons de polyamide lot GRIVORY HT2V-5H ont été conditionnés 36 heures à 90 °C en étuve. Les échantillons ont été pesés. Puis, les échantillons ont été immergés dans de l'eau déionisée à 90 °C pendant 3 semaines.

A l'issue des 3 semaines, les échantillons sont séchés et pesés.

La reprise en eau (rapport de l'augmentation de poids δm du matériau par rapport à son poids initial avant immersion dans l'eau, moyenne sur les six échantillons) a été mesurée de 2,3 %.

Un même lot d'échantillons de polyamide de type GRIVORY HT2V-5H, conditionnés 36 heures à 90 °C en étuve, a été mis dans de la vapeur d'eau (100 °C) pendant 1 heure. La reprise en eau calculée est alors de 2 %.

Ces données sont conformes à celles de la littérature et à celles communiquées par Schneider Electric.

Le protocole est celui connue de « la courbe de percée ». Les échantillons sont placés dans un réacteur haute pression (300 bar) rempli d'un liquide et l'on fait monter la pression « hydrostatique » de ce liquide par l'action d'une pompe à température contrôlée (20-25 °C). Avec un taux de charge massique de 50 % en fibres de silice le polyamide est constellé de défauts de surface qui laissent émerger des fibres de verre jusqu'à 50 microns au-dessus du plan. Au pied de ces fibres, il y a de bourrelets et ou des creux de 20 microns de profondeur ou plus. Ces creux permettent à l'eau de pénétrer en profondeur. Quand on plonge ces échantillons dans un liquide et que l'on augmente la pression, le liquide va remplir ces cavités, d'abord les grosses cavités puis les petites. La pression capillaire s'oppose à la pénétration du liquide. Il faut donc augmenter la pression hydrostatique de façon à « percer » cette opposition. On progresse ainsi par palier, chaque palier représentant la percée d'un domaine de rayon capillaire.

Le traitement d'imprégnation dans le CO₂ supercritique a été opéré dans un autoclave dans lequel est introduit l'additif hydrophobe.

L'autoclave est chargé avec 500 g de CO₂ liquide par une pompe jusqu'à atteindre une pression de 50 bar et une température de 5°C. On chauffe alors le réacteur par effet joule de façon à passer dans la zone supercritique. L'additif peut être présent dans le réacteur, ou apporté pur par une pompe dans le réacteur.

### EXEMPLE 1 (contre-exemple)

### Imprégnation à pression hydrostatique par une huile siliconée

Six échantillons de polyamide lot GRIVORY HT2V-5H ont été préalablement conditionnés 36 heures à 90 °C.

Ce pré-conditionnement à 90 °C pendant 36 heures permet d'éliminer l'eau adsorbée en surface et aux pieds des fibres micrométriques de silice qui percent la surface.

Les échantillons ont été soumis à une pression de 250 bar dans une huile siliconée de type polyphényl/méthylsiloxane (« Silicone oil AR 200 » commercialisée par Aldrich) pendant 12 heures à température ambiante.

Les échantillons ont ensuite été séchés.

### Test de reprise en eau

Les échantillons ont été immergés dans l'eau à 90 °C.

Après trois semaines, la reprise en eau (calculée comme le rapport de l'augmentation en poids δm du matériau par rapport à son poids initial avant immersion dans l'eau) est de 1 %.

Sans vouloir être lié par la théorie, lorsque l'on soumet les échantillons à 250 bar, les molécules d'huile siliconée sont « poussées » à l'intérieur des porosités de surface du polyamide chargé en fibres de silice. Toutefois, l'huile siliconée étant très hydrophobe, elle ne peut rentrer dans des pores qui seraient restés hydrophiles malgré le pré-conditionnement ([1]).

Les six plaques ont été conservées dans un dessiccateur à 90 % HR (humidité relative) pendant un an à température ambiante. Le poids des plaques n'a pas évolué. Les plaques sont sèches au toucher.

### EXEMPLE 2 (conforme à l'invention)

### Imprégnation par une huile siliconée à l'aide du CO₂ supercritique

Six échantillons de polyamide lot GRIVORY HT2V-5H, préalablement conditionnés 36 heures à 90 °C, ont été soumis à une pression de 250 bar à 90 °C de CO₂ supercritique en présence de 0,5 ml d'huile de silicone (Silicone oil AR 200 commercialisée par Aldrich) pendant 1 heure.

Les échantillons ont ensuite été séchés.

### Test de reprise en eau

Les échantillons ont été immergés dans l'eau à 90 °C.

Après trois semaines, la reprise en eau, calculée comme indiqué précédemment, est de 0,2 %.

Les six plaques ont été conservées dans un dessiccateur à 90 % HR (humidité relative) pendant un an à température ambiante. Le poids des plaques n'a pas évolué. Les plaques sont sèches au toucher.

### Conclusion

Le traitement d'imprégnation à l'aide du CO₂ supercritique est plus efficace, en comparaison à un traitement d'imprégnation à pression hydrostatique. Il permet de réduire de manière significative la reprise en eau du matériau à base de polyamide.

Le matériau imprégné conserve avec le temps ses propriétés améliorées de faible de reprise en eau.

De la même façon, des échantillons de polyamide chargé en fibres de silice ont été traités avec une huile siliconée de plus faible viscosité cinématique (20 mPa.s à la place de 200 mPa.s), l'huile Silicone Oil AR 20 commercialisée par Aldrich.

Dans même que dans l'exemple 2, l'imprégnation par l'huile siliconée dans l'atmosphère de CO₂ supercritique a permis un traitement hydrophobe à cœur des échantillons qui a limité la reprise en eau.

Le traitement dans le CO₂ supercritique apparaît comme étant de 3 à 5 fois plus efficace que l'imprégnation par pression hydrostatique.

Le dépôt par « dip-coating » à pression ambiante d'huile de silicone de même grade forme un dépôt de surface labile qui ne permet pas d'augmenter l'hydrophobie des plaques GRIVORY.

Il a également été tenté de faire une imprégnation à 250 bar à 90 °C en pression hydrostatique, en montant d'abord la température puis la pression, mais les plaques GRIVORY testées ont été très déformées (aplaties), le polymère ayant flué.

### EXEMPLE 3 (conforme à l'invention)

### Imprégnation par un composé fluoré à l'aide du CO₂ supercritique

### Synthèse du composé fluoré

Un dérivé uréique (N-décyl-N'-perfluorodécylurée) a été synthétisé à partir de la perfluorodécylamine et du décylisocyanate.

La synthèse est effectuée à 5 °C dans de l'éther éthylique anhydre (200 mL), suivie de 5 heures d'agitation à température ambiante.

Le milieu réactionnel concentré à 20 mL est transféré dans un tube ouvert de verre de 4 cm de section et de longueur 5 mL. On concentre à sec. La quantité de dérivé uréique récupérée est de 2 g.

### Imprégnation à l'aide du CO₂ supercritique

Le tube est mis dans un autoclave de 600 mL de volume utile dans lequel on dépose également six échantillons de polyamide lot GRIVORY HT2V-5H, préalablement conditionnés 36 heures à 90 °C.

On remplit l'autoclave de CO₂ liquide (52 bar) puis on le chauffe pour obtenir une température de 100 °C et une pression de 300 bar. Le traitement d'imprégnation dure deux heures. On arrête ensuite le chauffage et on décomprime en deux heures.

### Test de reprise en eau

Les échantillons traités sont pesés et mis en étuve dans de l'eau à 90 °C pendant trois semaines. On les retire de l'étuve, on les sèche une demi-heure à 60 °C puis ils sont à nouveau pesés.

La reprise en eau, calculée comme décrit précédemment, est de 0,5 %.

Les échantillons de référence venant du même lot de matière, mais non imprégnés, ont pris environ 2,3 % d'eau.

### Références

[1] Laredo et al., Macromolecules, 2003, 36(26), 9840;
[2] Cooper, J. Mater Chemistry 2000, 10, 207-234 ;
[3] Tarek Abou Elmaaty et al., Fibers, 2015, 3, 309-322.

## Revendications

1. Procédé de traitement d'un matériau à base de polyamide(s) comprenant des fibres et/ou charges de silice, par imprégnation par au moins un additif hydrophobe dans le CO₂ supercritique.

2. Procédé selon la revendication 1, destiné à réduire la reprise en eau dudit matériau.

3. Procédé selon la revendication 1 ou 2, dans lequel le matériau est à base de polyamide 6,6 ou de polyphthalamide chargé en fibres et/ou charges de silice, en particulier chargé en fibres micrométriques de silice.

4. Procédé selon l'une quelconque des revendications précédentes, dans lequel le matériau comprend des fibres et/ou charges de silice, en particulier des fibres micrométriques de silice, en une proportion massique supérieure ou égale à 20 %, en particulier supérieure ou égale à 30 % et plus particulièrement comprise entre 30 et 50 %, de la masse totale du matériau.

5. Procédé selon l'une quelconque des revendications précédentes, dans lequel ledit matériau forme tout ou partie d'un composant électriquement isolant, en particulier mis en œuvre dans un appareil électrique tel qu'un disjoncteur.

6. Procédé selon l'une quelconque des revendications précédentes, dans lequel l'additif hydrophobe est choisi parmi les huiles siliconées diélectriques solubles dans le CO₂ supercritique, en particulier choisies parmi les huiles siliconées linéaires de type polydiméthylsiloxane et les huiles siliconées aromatiques, en particulier de type polyphényl/alkylsiloxane et plus particulièrement choisies parmi les huiles poly(diméthylsiloxane-co-méthylphénylsiloxane) et poly(diméthylsiloxane-co-diphénylsiloxane) ; et les composés fluorés hydrophobes solubles dans le CO₂ supercritique, en particulier comprenant au moins un chaîne hydrocarbonée hydrophobe au moins partiellement fluorée, en particulier totalement fluorée, comportant au moins 6 atomes de carbone, de préférence au moins 8 atomes de carbone.

7. Procédé selon la revendication précédente, dans lequel ledit composé fluoré hydrophobe comprend, outre au moins ladite chaîne hydrocarbonée hydrophobe, au moins un groupement apte à interagir par liaison hydrogène ou par interaction de Van der Waals avec les chaînes de polyamide, en particulier un groupement -NH-C(O)-O-, -NH-C(O)- ou -NH-C(O)-NH-.

8. Procédé selon l'une quelconque des revendications précédentes, dans lequel le ou lesdits additifs hydrophobes sont mis en œuvre en une quantité comprise entre 0,2 et 5 % en poids par rapport au poids du matériau à base de polyamide, en particulier comprise entre 0,5 et 3 % en poids.

9. Procédé selon l'une quelconque des revendications précédentes, comprenant au moins les étapes consistant en :
- placer un matériau à base de polyamide(s) chargé en fibres et/ou charges de silice et au moins un additif hydrophobe dans un autoclave ;
- générer du dioxyde de carbone supercritique dans l'autoclave ;
- maintenir le matériau dans l'autoclave en présence du CO₂ supercritique et de l'additif hydrophobe afin d'assurer l'imprégnation du matériau par ledit additif hydrophobe ;
- récupérer le matériau imprégné par dépressurisation de l'autoclave ; et
- optionnellement sécher le matériau ainsi imprégné.

10. Procédé selon l'une quelconque des revendications précédentes, dans lequel le traitement d'imprégnation dans le CO₂ supercritique est opéré à une température comprise entre 50 °C et 150 °C, en particulier entre 80 et 120 °C et plus particulièrement entre 90 et 100 °C ; et/ou à une pression comprise entre 80 et 450 bar, en particulier entre 150 et 400 bar et plus particulièrement entre 200 et 350 bar ; et/ou pendant une durée comprise entre 30 et 180 minutes, et notamment entre 60 et 135 minutes.

11. Matériau à base de polyamide(s) comprenant des fibres et/ou charges de silice et imprégné par au moins un additif hydrophobe, obtenu par un procédé selon l'une quelconque des revendications 1 à 10.

12. Matériau selon la revendication précédente, ledit matériau étant imprégné par le ou lesdits additifs hydrophobes sur une épaisseur s'étendant de la surface du matériau jusqu'à une profondeur d'au moins 200 µm, en particulier jusqu'à au moins 300 µm de profondeur et plus particulièrement jusqu'à au moins 400 µm de profondeur.

13. Matériau selon la revendication 11 ou 12, comprenant une teneur massique en le ou lesdits additifs hydrophobes comprise entre 0,2 et 5 %, en particulier entre 0,5 et 2 % et plus particulièrement entre 0,8 et 1,2 %, par rapport au poids total du matériau.

14. Composant électriquement isolant formé en tout ou partie d'un matériau à base de polyamide(s) comprenant des fibres et/ou charges de silice et imprégné par au moins un additif hydrophobe, obtenu par un procédé selon l'une quelconque des revendications 1 à 10.

15. Utilisation d'un composant électriquement isolant tel que défini selon la revendication 14, dans un appareil électrique, en particulier dans un disjoncteur.

16. Appareil électrique comprenant au moins un composant électriquement isolant tel que défini en revendication 14.

17. Appareil électrique selon la revendication précédente, ledit appareil comprenant une enceinte étanche dans laquelle se trouvent, outre le ou lesdits composants électriquement isolants, des composants électriques et un milieu gazeux assurant l'isolation électrique et l'extinction des arcs électriques susceptibles de se former au sein de cette enceinte étanche, ledit milieu gazeux comprenant de préférence un mélange de fluorocétone et d'un gaz vecteur tel que l'air, ledit appareil électrique étant plus particulièrement un appareil électrique moyenne ou basse tension, tel qu'un transformateur électrique à isolation gazeuse, une ligne à isolation gazeuse ou un jeu de barres pour le transport ou la distribution de l'électricité ou un appareil électrique de connexion/déconnexion, par exemple un disjoncteur.

## Patentansprüche

1. Verfahren zur Behandlung eines Materials auf der Basis von Polyamid(en), das Siliciumdioxidfasern und/oder -füllstoffe umfasst, durch Imprägnierung mit mindestens einem hydrophoben Zusatzstoff in superkritischem CO₂.

2. Verfahren nach Anspruch 1, das dazu bestimmt ist, die Wasseraufnahme des Materials zu reduzieren.

3. Verfahren nach Anspruch 1 oder 2, wobei das Material auf Polyamid 6.6 basiert oder auf Polyphthalamid, das mit Siliciumdioxidfasern und/oder -füllstoffen verstärkt ist, insbesondere mit Siliciumdioxidfasern im Mikrometerbereich verstärkt ist.

4. Verfahren nach einem der vorhergehenden Ansprüche, wobei das Material Siliciumdioxidfasern und/oder -füllstoffe, insbesondere Siliciumdioxidfasern im Mikrometerbereich, in einem Massenverhältnis größer oder gleich 20 %, insbesondere größer oder gleich 30 % und weiter insbesondere zwischen 30 und 50 % der Gesamtmasse des Materials umfasst.

5. Verfahren nach einem der vorhergehenden Ansprüche, wobei das Material das gesamte oder einen Teil eines elektrisch isolierenden Bauteils bildet, das insbesondere in einem elektrischen Gerät wie einem Stromkreisunterbrecher eingesetzt wird.

6. Verfahren nach einem der vorhergehenden Ansprüche, wobei der hydrophobe Zusatzstoff gewählt ist unter den in superkritischem CO₂ löslichen dielektrischen Silikonölen, die insbesondere unter den linearen Silikonölen vom Typ Polydimethylsiloxan und den aromatischen Silikonölen, insbesondere vom Typ Polyphenyl/Alkylsiloxan, gewählt sind und weiter insbesondere unter den Ölen Poly(dimethylsiloxan-co-methylphenylsiloxan) und Poly(dimethylsiloxan-co-diphenylsiloxan) gewählt sind; und den in superkritischem CO₂ löslichen hydrophoben fluorierten Verbindungen, die insbesondere mindestens eine zumindest teilweise fluorierte, insbesondere vollständig fluorierte, hydrophobe Kohlenwasserstoffkette umfassen, die mindestens 6 Kohlenstoffatome, bevorzugt mindestens 8 Kohlenstoffatome beinhaltet.

7. Verfahren nach dem vorhergehenden Anspruch, wobei die hydrophobe fluorierte Verbindung neben der mindestens einen hydrophoben Kohlenwasserstoffkette mindestens eine Gruppe umfasst, die geeignet ist, durch Wasserstoffbrückenbindung oder durch Van-der-Waals-Wechselwirkung mit den Polyamidketten in Wechselwirkung zu treten, insbesondere eine -NH-C(O)-O-, -NH-C(O)- oder -NH-C(O)-NH-Gruppe.

8. Verfahren nach einem der vorhergehenden Ansprüche, wobei der oder die hydrophoben Zusatzstoffe in einer Menge zwischen 0,2 und 5 Gew.-% bezogen auf das Gewicht des Materials auf Polyamidbasis, insbesondere zwischen 0,5 und 3 Gew.-%, eingesetzt wird bzw. werden.

9. Verfahren nach einem der vorhergehenden Ansprüche, das mindestens die Schritte umfasst, die in Folgendem bestehen:
- Einbringen eines Materials auf der Basis von Polyamid(en), das mit Siliciumdioxidfasern und/oder -füllstoffen verstärkt ist, und mindestens eines hydrophoben Zusatzstoffs in einen Autoklaven;
- Erzeugen von superkritischem Kohlendioxid in dem Autoklaven;
- Halten des Materials im Autoklaven in Gegenwart des superkritischen CO₂ und des hydrophoben Zusatzstoffs, um die Imprägnierung des Materials mit dem hydrophoben Zusatzstoff zu gewährleisten;
- Rückgewinnen des imprägnierten Materials durch Bringen des Autoklaven auf Außendruck; und
- optional Trocknen des so imprägnierten Materials.

10. Verfahren nach einem der vorhergehenden Ansprüche, wobei die Imprägnierungsbehandlung in dem superkritischen CO₂ bei einer Temperatur zwischen 50 °C und 150 °C, insbesondere zwischen 80 und 120 °C und weitere insbesondere zwischen 90 und 100 °C; und/oder bei einem Druck zwischen 80 und 450 bar, insbesondere zwischen 150 und 400 bar und weiter insbesondere zwischen 200 und 350 bar; und/oder während einer Zeit zwischen 30 und 180 Minuten und insbesondere zwischen 60 und 135 Minuten durchgeführt wird.

11. Material auf der Basis von Polyamid(en), das Siliciumdioxidfasern und/oder -füllstoffe umfasst und mit mindestens einem hydrophoben Zusatzstoff imprägniert ist, das mit einem Verfahren nach einem der Ansprüche 1 bis 10 erhalten wird.

12. Material nach dem vorhergehenden Anspruch, wobei das Material mit dem oder den hydrophoben Zusatzstoffen über eine Dicke imprägniert ist, die sich von der Oberfläche des Materials bis in eine Tiefe von mindestens 200 µm, insbesondere bis zu mindestens 300 µm Tiefe und weiter insbesondere bis zu mindestens 400 µm Tiefe erstreckt.

13. Material nach Anspruch 11 oder 12, das einen Massengehalt an dem oder den hydrophoben Zusatzstoffen zwischen 0,2 und 5 %, insbesondere zwischen 0,5 und 2 % und weiter insbesondere zwischen 0,8 und 1,2 % bezogen auf das Gesamtgewicht des Materials umfasst.

14. Elektrisch isolierendes Bauteil, das ganz oder teilweise aus einem Material auf der Basis von Polyamid(en) gebildet ist, das Siliciumdioxidfasern und/oder -füllstoffe umfasst und mit mindestens einem hydrophoben Zusatzstoff imprägniert ist, das mit einem Verfahren nach einem der Ansprüche 1 bis 10 erhalten wird.

15. Verwendung eines elektrisch isolierenden Bauteils nach Anspruch 14 in einem elektrischen Gerät, insbesondere in einem Stromkreisunterbrecher.

16. Elektrisches Gerät, das mindestens ein elektrisch isolierendes Bauteil nach Anspruch 14 umfasst.

17. Elektrisches Gerät nach dem vorhergehenden Anspruch, wobei das Gerät ein dichtes Gehäuse umfasst, in dem sich neben dem oder den elektrisch isolierenden Bauteilen elektrische Bauteile und ein gasförmiges Medium befinden, das die elektrische Isolation und das Löschen der Lichtbögen gewährleistet, die sich in diesem dichten Gehäuse bilden könnten, wobei das gasförmige Medium bevorzugt ein Gemisch aus Fluorketon und einem Trägergas wie Luft umfasst, wobei das elektrische Gerät insbesondere ein elektrisches Mittel- oder Niederspannungsgerät wie ein gasisolierter elektrischer Transformator, eine gasisolierte Leitung oder eine Sammelschiene zur Übertragung oder Verteilung von Elektrizität oder ein elektrisches Verbindungs-/Trenngerät ist, zum Beispiel ein Stromkreisunterbrecher.

## Claims

1. Process for treating a polyamide-based material comprising silica fibres and/or fillers, by impregnation with at least one hydrophobic additive in supercritical CO₂.

2. Process according to Claim 1, intended for reducing the water uptake of said material.

3. Process according to Claim 1 or 2, in which the material is based on polyamide 6,6 or on polyphthalamide filled with silica fibres and/or fillers, in particular filled with micrometric silica fibres.

4. Process according to any one of the preceding claims, in which the material comprises silica fibres and/or fillers, in particular micrometric silica fibres, in a mass proportion of greater than or equal to 20%, in particular greater than or equal to 30% and more particularly between 30% and 50% of the total mass of the material.

5. Process according to any one of the preceding claims, in which said material forms all or part of an electrically insulating component, in particular used in an electric appliance, such as a circuit breaker.

6. Process according to any one of the preceding claims, in which the hydrophobic additive is chosen from dielectric silicone oils that are soluble in supercritical CO₂, in particular chosen from linear silicone oils of polydimethylsiloxane type and aromatic silicone oils, in particular of polyphenyl/alkylsiloxane type and more particularly chosen from poly(dimethylsiloxane-co-methylphenylsiloxane) and poly(dimethylsiloxane-co-diphenylsiloxane) oils; and hydrophobic fluoro compounds that are soluble in supercritical CO₂, in particular comprising at least one hydrophobic hydrocarbon-based chain which is at least partially fluorinated, in particular totally fluorinated, including at least 6 carbon atoms, preferably at least 8 carbon atoms.

7. Process according to the preceding claim, in which said hydrophobic fluoro compound comprises, besides at least said hydrophobic hydrocarbon-based chain, at least one group that is capable of interacting by hydrogen bonding or by Van der Waals interaction with the polyamide chains, in particular an -NH-C(O)-O-, -NH-C(O)- or -NH-C(O)-NH- group.

8. Process according to any one of the preceding claims, in which said hydrophobic additive(s) are used in an amount of between 0.2% and 5% by weight relative to the weight of the polyamide-based material, in particular between 0.5% and 3% by weight.

9. Process according to any one of the preceding claims, comprising at least the steps consisting in:
- placing a polyamide-based material filled with silica fibres and/or fillers and at least one hydrophobic additive in an autoclave;
- generating supercritical carbon dioxide in the autoclave;
- maintaining the material in the autoclave in the presence of the supercritical CO₂ and of the hydrophobic additive so as to ensure the impregnation of the material with said hydrophobic additive;
- recovering the impregnated material by depressurization of the autoclave; and
- optionally drying the material thus impregnated.

10. Process according to any one of the preceding claims, in which the impregnation treatment in supercritical CO₂ is performed at a temperature of between 50°C and 150°C, in particular between 80 and 120°C and more particularly between 90 and 100°C; and/or at a pressure of between 80 and 450 bar, in particular between 150 and 400 bar and more particularly between 200 and 350 bar; and/or for a time of between 30 and 180 minutes, and notably between 60 and 135 minutes.

11. Polyamide-based material comprising silica fibres and/or fillers and impregnated with at least one hydrophobic additive, obtained via a process according to any one of Claims 1 to 10.

12. Material according to the preceding claim, said material being impregnated with said hydrophobic additive(s) over a thickness extending from the surface of the material down to a depth of at least 200 µm, in particular down to a depth of at least 300 µm and more particularly down to a depth of at least 400 µm.

13. Material according to Claim 11 or 12, comprising a mass content of said hydrophobic additive(s) of between 0.2% and 5%, in particular between 0.5% and 2% and more particularly between 0.8% and 1.2% relative to the total weight of the material.

14. Electrically insulating component totally or partly formed from a polyamide-based material comprising silica fibres and/or fillers and impregnated with at least one hydrophobic additive, obtained via a process according to any one of Claims 1 to 10.

15. Use of an electrically insulating component as defined in Claim 14, in an electric appliance, in particular in a circuit breaker.

16. Electric appliance comprising at least one electrically insulating component as defined in Claim 14.

17. Electric appliance according to the preceding claim, said appliance comprising a leaktight chamber in which are found, besides said electrically insulating component(s), electric components and a gaseous medium ensuring the electrical insulation and the extinction of electric arcs that may be formed within this leaktight chamber, said gaseous medium preferably comprising a mixture of fluoro ketone and of a carrier gas such as air, said electric appliance more particularly being a medium-voltage or low-voltage electric appliance, such as a gas-insulated electric transformer, a gas-insulated line or a set of bars for transporting or distributing electricity or a connection/disconnection electric appliance, for example a circuit breaker.
